# EUROPEAN PATENT APPLICATION

(11) **EP 4 841 502 A1**
(43) Date of publication of application: **18.11.2026**
(21) Application number: 25382477.5
(22) Date of filing: 12.05.2025
(51) Int. Cl.: G06K 19/02, B32B 21/00, B42D 25/36

(54) **CARD-LIKE DATA CARRIER AND METHOD FOR MANUFACTURING A CARD-LIKE DATA CARRIER**

(71) Applicant: Giesecke+Devrient ePayments GmbH, 81677 München (DE)
(72) Inventor: Gali, Josep, 08820 El Prat de Llobregat (Barcelona) (ES)
(74) Representative: LKGLOBAL Partnerschaftsgesellschaft mbB

(57) **Abstract**

The invention relates to a card-like data carrier (1). The card-like data carrier (1) comprises a first core layer (11) and a first outer layer (12) connected to a first side (11a) of the first core layer (11). The first core layer (11) comprises a wooden or biobased cellulose material and the first outer layer (12) comprises a biobased plastic material having at least partially transparent material characteristics. The invention relates to a method for manufacturing a card-like data carrier (1).

## Description

The present invention generally relates to card-like data carriers having improved material characteristics facilitating the application of security elements. In particular, the invention relates to a card-like data carrier as well as to a method for manufacturing a card-like data carrier.

Card-like data carriers, in particular smart cards, are widely used in a variety of applications. For example, smart cards may be used as payment cards, credit cards, access cards or identity (ID) cards. Such cards provide a user with various functionalities like identification, authentication, payment or access to specified services, etc. Card-like data carriers often comprise security elements like magnetic stripes, signature panels, lens-based structures or holograms which provide optical effects that may be visible to the user. Such security features are applied onto a surface of the card-like data carrier using specified techniques. For example, a security feature may be applied onto an overlay layer of the card-like data carrier using a hot stamping process. However, a proper connection between the security feature and the overlay layer and/or between the security feature and the underlying substrate require additional preparational steps like applying a varnish to ensure a sufficiently strong adherence between the underlying substrate and the security feature. Particular difficulties may arise if a security feature like a magnetic stripe has to be applied to a surface of a card-like data carrier. In particular, it might not be possible to apply a magnetic stripe to a wood-based card-like data carrier.

It may be seen as an object of the invention to facilitate the application of security elements to a card-like data carrier comprising wooden materials or biobased cellulose materials.

A card-like data carrier and a method for manufacturing a card-like data carrier according to the features of the independent claims are provided. Further embodiments of the invention are evident from the dependent claims, the Figures and the following description.

According to an aspect of the invention, a card-like data carrier is provided. The card-like data carrier comprises a first core layer and a first outer layer connected to a first side of the first core layer. The first core layer comprises a wooden material or a biobased cellulose material. The first outer layer comprises a biobased plastic material having at least partially transparent material characteristics.

The inventive card-like data carrier may facilitate the application of security features like magnetic stripes, signature panels, lens-based structures or holograms onto the card-like data carrier. In particular, the biobased plastic material of the first outer layer may provide the required characteristics and properties which allow the application of a security feature to the wooden-based or cellulose-based first core layer, without requiring any preparational steps like providing a varnish to a surface of the overlay layer or to the underlying wooden substrate. For example, the biobased plastic material of the first outer layer may enable the application of a magnetic stripe to the wooden-based or cellulose-based core layer. In this context, a magnetic stripe may be a thin strip of magnetic material applied onto or embedded in the card-like data carrier, wherein information can be stored in the magnetic stripe by altering the magnetization of ironbased particles contained in the magnetic material in a specific pattern.

In addition, the biobased plastic material of the first outer layer may enable the application, e.g., a hot stamping, of other security features, like for instance holograms, to the wooden-based or cellulose-based first core layer. In other words, the biobased plastic material of the first outer layer may provide the required characteristics and properties in order to allow a hot stamping of security features to the wooden-based or cellulose-based first core layer although no varnish has been applied to the outer surface of the overlay layer or to the wooden-based or cellulose-based first core layer. In general, the processability in terms of hot stamping may be improved by providing a biobased plastic material for the first outer (overlay) layer.

The first core layer comprises a wooden material or a biobased cellulose material. In particular, the first core layer consists of a wooden material or a biobased cellulose material and may thus provide a wood substrate or a cellulose substrate. The first core layer may show a structured appearance of natural wood or cellulose, e.g., a structured appearance that would appear if a wooden block were cut along a flat plane. This structured appearance may be visible through the first outer layer since the first outer layer may be at least partially transparent or even fully transparent. A thickness of the first core layer may be between 100 µm and 250 µm, preferably between 150 µm and 200 µm, more preferably between 170 µm and 190 µm, and most preferably 180 µm.

The first outer layer comprises a biobased plastic material and may provide an overlay layer. In particular, the first outer layer consists of a biobased plastic material. The first outer layer may not comprise any biobased cellulose material like bio fleece etc., but only biobased plastic material. The usage of biobased plastic material instead of biobased cellulose material for the first outer layer may provide the above-mentioned characteristics and properties for the overlay layer of the card-like data carrier, in particular the capability of the card-like data carrier to include a magnetic stripe although the core substrate, i.e., the first core layer, of the card-like data carrier is made from wooden or cellulose material. Furthermore, the usage of biobased plastic material instead of biobased cellulose material for the first outer layer may provide the capability of the card-like data carrier to receive security features like holograms on its outer surface via a hot stamping process, without additionally using any varnishes for enhancing adherence to the wood-based or cellulose-based core substrate, i.e., first core layer.

The first outer layer may be a film or a foil applied onto the first surface of the first core layer during manufacturing of the card-like data carrier. An adhesive may be used to connect, e.g., bond, the first outer layer to the first core layer. The biobased plastic material of the first outer layer may be rigid and may have relatively high mechanical strength, thereby improving the mechanical resistance of the first outer layer against external or environmental influences. For example, the biobased plastic material of the first outer layer may have a modulus of elasticity of up to 5000 MPa, in particular between 2850 MPa and 3500 MPa, and/or a density of about 1,21 to 1,43 g/cm³. In addition, the biobased plastic material may be resistant to oil, fat and/or alcohol.

The card-like data carrier may be a smart card, a payment card, a credit card, a debit card, an access card or an identity (ID) card. The card-like data carrier may provide the user with various functionalities like identification, authentication, payment or access to specified services, etc.

According to an embodiment, the biobased plastic material is a polyester material.

In particular, the biobased plastic material may comprise or consist of a polyester material providing the first outer layer with at least partially or even fully transparent material characteristics. In an example, the biobased plastic material may be a thermoplastic polyester.

According to an embodiment, the biobased plastic material comprises polylactide (PLA) or polylactic acid.

In particular, the biobased plastic material may comprise or consist of polylactide or polylactic acid. The biobased plastic material may be biodegradable and may be seen as a biobased thermoplastic polyester primarily made from renewable resources.

According to an embodiment, the biobased plastic material is made from renewable biomass, in particular from fermented plant starch, corn, cassava, sugarcane, sugar beet pulp or any combination thereof.

For example, the polylactide or polylactic acid may be generated based on fermented plant starch, corn, cassava, sugarcane or sugar beet pulp. An overlay foil or film may be formed from the polylactide or polylactic acid, wherein the overlay foil or film may constitute the first outer layer that is connected to the first side of the first core layer.

According to an embodiment, a thickness of the first outer layer is between 50 µm and 200 µm, preferably between 100 µm and 150 µm, more preferably between 100 µm and 110 µm, and most preferably 105 µm.

Using the first outer layer that comprises the biobased plastic material may enable providing a thinner overlay layer for the card-like data carrier when compared to a configuration in which a biobased cellulose or bio fleece material was used as overlay layer for the card-like data carrier. The first outer layer may be a cover layer that protects the first core layer against external or environmental influences. However, the first outer layer may be at least partially transparent such that a user viewing the card-like data carrier may recognize a structure or pattern of the first core layer, in particular a structured wood surface, of the first core layer. In addition, the first outer layer may cover printed portions on the first surface of the first core layer.

According to an embodiment, the card-like data carrier further comprises a first inner layer and an antenna element, wherein the first inner layer is connected to a second side of the first core layer and wherein the antenna element is connected to or integrated into the first inner layer.

The antenna element may be arranged between the first inner layer, herein also referred to as first protective layer, and a second inner layer, herein also referred to as second protective layer.

The antenna element may comprise an antenna, a coil or an electrical (copper) conductor connected to a chip module of the card-like data carrier. The antenna element may be at least partially embedded within the first inner layer. The antenna element may be configured for a contactless communication with an external reading device.

Since the first inner layer is connected to the second side of the first core layer, the first core layer is arranged between the first outer layer and the first inner layer. The antenna element may be connected to or may be integrated into the first inner layer such that there is no contact between the first core layer and the antenna element.

According to an embodiment, the first inner layer comprises a wooden or biobased cellulose material.

For example, the first inner layer may comprise a bio fleece material. However, it is possible that the first inner layer may comprise the same material as the first outer layer. In particular, the first inner layer may comprise a polylactide (PLA) or polylactide acid material. In this manner, all layers of the card-like data carrier may be made from natural resources, e.g., renewable resources. In particular, the usage of petrochemical-based plastics can be avoided with the inventive card-like data carrier.

A thickness of the first inner layer may be between 50 µm and 250 µm, preferably between 100 µm and 200 µm, more preferably between 140 µm and 160 µm, and most preferably 150 µm.

According to an embodiment, the card-like data carrier further comprises a second core layer, a second outer layer connected to a first side of the second core layer, and a second inner layer connected to a second side of the second core layer, wherein the second outer layer comprises a biobased plastic material having at least partially transparent material characteristics. The second inner layer may comprise a wooden or a biobased cellulose material and/or the second core layer may comprise a wooden or biobased cellulose material.

The first outer layer, the first core layer, the first inner layer, the second inner layer, the second core layer and the second outer layer may form a card body of the card-like data carrier. It is noted that the card body may be composed of further card layers. A lamination process may be used to connect these card layers in order to form the card body. The card-like data carrier may also comprise a chip module including a chip element which is configured for a contact-based communication with an external reading device. The chip module may be inserted within the card body, i.e., within one or more of the above-mentioned layers of the card body. The card-like data carrier, in particular the card body of the card-like data carrier, may be present in the so-called ID-1 format.

According to an embodiment, the card-like data carrier further comprises a security element applied onto an outer surface of the first outer layer.

The security element may be applied onto the outer surface of the first outer layer such that it is attached to the first side of and/or reaches into the first core layer. For example, an optically variable security element like a hologram may be hot stamped onto the outer surface of the first outer layer, thereby possibly pressing it onto the first side of the first core layer. In this manner, the security element may be fixedly attached to a first side of the card-like data carrier. As explained above, the usage of the first outer layer that comprises the biobased plastic material allows to apply security elements like holograms in a hot stamping process while avoiding any additional varnishes.

This means that if a biobased cellulose material would be used for the first outer layer and a security element would be provided onto the first outer layer using a hot stamping process, a varnish might have been required to achieve the required adherence between the first core layer and the security element. However, using the biobased plastic material for the first outer layer will itself, i.e., due to its material characteristics, already provide the required adherence between the security element and the underlying first core layer which is made of wood or cellulose material.

Furthermore, a security element like in the form of a magnetic stripe may be attached to the card-like data carrier. Also in this case, using the biobased plastic material for the first outer layer will itself, i.e., due to its material characteristics, allow an improved manufacturability and also an improved adherence, thereby making it possible to securely attach the magnetic material of the magnetic stripe to the underlying first core layer which is made of wood or cellulose material.

It is noted that the card-like data carrier may comprise further security elements like optical thin-film elements or lens-based structures. Again, using the biobased plastic material for the first outer layer will itself, i.e., due to its material characteristics, improve manufacturability and adherence to the underlying first core layer also for these security elements.

According to an aspect, a method for manufacturing a card-like data carrier is provided. A step of the method comprises providing a first core layer that comprises a wooden or biobased cellulose material. Another step of the method comprises providing a first outer layer that comprises a biobased plastic material having at least partially transparent material characteristics. Another step of the method comprises connecting the first outer layer to a first side of the first core layer.

The method steps may be carried out in the indicated order.

In another step of the method, the biobased plastic material is obtained from renewable biomass, in particular from fermented plant starch, corn, cassava, sugarcane or sugar beet pulp. Obtaining the biobased plastic material on the one hand and providing and connecting the first core layer and the first outer layer on the other hand may be carried out in separate entities.

Exemplary embodiments of the invention are explained in more detail below with reference to schematic drawings.
- Fig. 1: shows a card-like data carrier.
- Fig. 2: shows a flow diagram of a method for manufacturing a card-like data carrier.

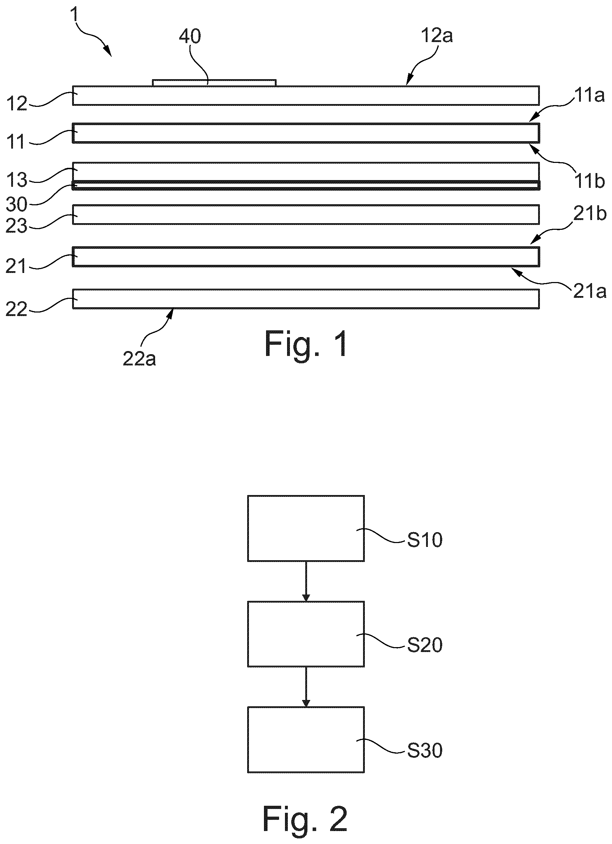

Fig. 1 shows a card-like data carrier 1, for example a smart card, a payment card, a credit card, a debit card, an access card or an identity (ID) card. It is noted that the card-like data carrier is shown in a partially exploded view for better illustration.

The card-like data carrier 1 comprises a first core layer 11 and a first outer layer 12 connected to a first side 11a of the first core layer 11. The card-like data carrier 1 further comprises a first inner layer 13 connected to a second side 11b of the first core layer 11. An antenna element 30 is connected to or integrated into the first inner layer 13, for example opposite to the first core layer 11. The card-like data carrier 1 further comprises a second core layer 21 and a second outer layer 22 connected to a first side 21a of the second core layer 21. The card-like data carrier 1 further comprises a second inner layer 23 connected to a second side 21b of the second core layer 21.

The first outer layer 11 and/or the second outer layer 21 may comprise a wooden or biobased cellulose material, for example a polyester material, in particular polylactide or polylactic acid. The biobased plastic material may be manufactured from renewable biomass, in particular from fermented plant starch, corn, cassava, sugarcane or sugar beet pulp.

The first outer layer 12 and/or the second outer layer 22 may have at least partially transparent or fully transparent material characteristics. In particular, when looking onto an outer surface 12a of the first outer layer 12, a user may see the first core layer 11, e.g., a structured or patterned surface of and/or any printings on the first core layer 11, through the at least partially transparent first outer layer 12. Analogously, when looking onto an outer surface 22a of the second outer layer 22, a user may see the second core layer 21, e.g., a structured or patterned surface of and/or any printings on the second core layer 21, through the at least partially transparent second outer layer 22. The first outer layer 11 and/or the second outer layer 21 may thus be considered as transparent overlay layers or biobased transparent layers of the card-like data carrier 1.

The first core layer 11 and/or the second core layer 21 may comprise a wooden or biobased cellulose material. Due to their material properties, first core layer 11 and/or the second core layer 21 may provide the main stability or structural strength to the card-like data carrier 1.

The first inner layer 13 and/or the second inner layer 23 may comprise a wooden or biobased cellulose material like for example bio fleece material. In an alternative example, the first inner layer 13 and/or the second inner layer 23 may comprise the same material as the first outer layer 12 and/or the second outer layer 22, respectively.

The card-like data carrier 1 may further comprise the antenna element 30 that is arranged between the first inner layer 13 and the second inner layer 23. The antenna element 30 may comprise a metallic element, for example a copper element, applied onto a surface of the first inner layer 13 opposite the first core layer 11. The antenna element 30 may include an antenna, a coil or an electrical (copper) conductor connected to a chip module (not shown) of the card-like data carrier 1. The antenna element 30 may be at least partially embedded within the first inner layer 13 and may be configured for a contactless communication with an external reading device. It is noted that the antenna element 30 may also be applied onto a surface of the second inner layer 23 opposite the second core layer 21. In either case, the antenna element 30 may be arranged between the first inner layer 13 and the second inner layer 23.

A security element 40 may be attached to the outer surface 12a of the first outer layer 12. The card-like data carrier 1 may facilitate the application of security elements 40 like magnetic stripes, signature panels, lens-based structures or holograms onto the card-like data carrier 1. In particular, the biobased plastic material of the first outer layer 12 may provide the required material properties that allow the application of the security element 40 to the wooden-based or cellulose-based card body, without requiring any preparational steps like providing a varnish to the first outer layer 12 or to the underlying first core layer 11. For example, the biobased plastic material of the first outer layer 12 may enable the application of a magnetic stripe to the wooden-based or cellulose-based first core layer 11.

In addition, the biobased plastic material of the first outer layer 12 may enable the application, e.g., a hot stamping, of other security elements 40, like for instance holograms, to the wooden-based or cellulose-based first core layer 11. In other words, the biobased plastic material of the first outer layer 12 may provide the required material properties in order to allow hot stamping of security elements 40 to the wooden-based or cellulose-based first core layer 11 although no varnish has been applied to the first outer layer 12 or to the wooden-based or cellulose-based first core layer 11. In general, the processability in terms of hot stamping may be improved by providing a biobased plastic material for the first outer layer 12.

The above explanations with respect to the first outer layer 12 and the first core layer 11 may analogously apply to the second outer layer 22 and the second core layer 21, respectively.

Fig. 2 shows a flow diagram of a method for manufacturing a card-like data carrier, for example for manufacturing the card-like data carrier 1 as explained with respect to Fig. 1 above. In a step S10 of the method, a first core layer 11 comprising a wooden or biobased cellulose material is provided. In another step S20 of the method, a first outer layer 12 comprising a biobased plastic material having at least partially transparent material characteristics is provided. In another step S30 of the method, the first outer layer 12 is connected to a first side 11a of the first core layer 11.

## Claims

1. A card-like data carrier (1), comprising:
a first core layer (11);
a first outer layer (12) connected to a first side (11a) of the first core layer (11);
wherein the first core layer (11) comprises a wooden or biobased cellulose material;
wherein the first outer layer (12) comprises a biobased plastic material having at least partially transparent material characteristics.

2. The card-like data carrier (1) of claim 1,
wherein the biobased plastic material is a polyester material.

3. The card-like data carrier (1) according to any one of the preceding claims,
wherein the biobased plastic material comprises polylactide or polylactic acid.

4. The card-like data carrier according to any one of the preceding claims,
wherein the biobased plastic material is made from renewable biomass, in particular from fermented plant starch, corn, cassava, sugarcane or sugar beet pulp.

5. The card-like data carrier (1) according to any one of the preceding claims,
wherein a thickness of the first outer layer (12) is between 50 µm and 200 µm, preferably between 100 µm and 150 µm, more preferably between 100 µm and 110 µm, and most preferably 105 µm.

6. The card-like data carrier (1) according to any one of the preceding claims, comprising:
a first inner layer (13);
an antenna element (30);
wherein the first inner layer (13) is connected to a second side (11b) of the first core layer (11);
wherein the antenna element (30) is connected to or integrated into the first inner layer (13).

7. The card-like data carrier (1) according to claim 6,
wherein the first inner layer (13) comprises a wooden or biobased cellulose material.

8. The card-like data carrier (1) according to any one of the preceding claims, comprising:
a second core layer (21);
a second outer layer (22) connected to a first side (21a) of the second core layer (21);
a second inner layer (23);
wherein the second inner layer (23) is connected to a second side (21b) of the second core layer (21);
wherein the second outer layer (22) comprises a biobased plastic material having at least partially transparent material characteristics.

9. The card-like data carrier (1) according to any one of the preceding claims, comprising:
a security element (40) applied onto an outer surface (12a) of the first outer layer (12).

10. Method for manufacturing a card-like data carrier (1), comprising:
providing a first core layer (11) comprising a wooden or biobased cellulose material (S10);
providing a first outer layer (12) comprising a biobased plastic material having at least partially transparent material characteristics (S20);
connecting the first outer layer (12) to a first side (11a) of the first core layer (11, S30).
